## Europäisches Patentamt
## European Patent Office
## Office européen des brevets

(19)

(11) Veröffentlichungsnummer: **0 000 027**
**B1**

(12) **EUROPÄISCHE PATENTSCHRIFT**

(21) Anmeldenummer: **78100042.7**

(22) Anmeldetag: **01.06.78**

(51) Int. Cl³: **B 29 D 7/14**

(54) **Verfahren zur Herstellung von Vinylchloridpolymerisat-Hartfolien nach dem Luvitherm-Verfahren**

(30) Priorität: **14.06.77 DE 2726658**

(43) Veröffentlichungstag der Anmeldung:
**20.12.78 Patentblatt 78/01**

(45) Bekanntmachung des Hinweises auf die Patenterteilung:
**17.09.80 Patentblatt 80/19**

(84) Benannte Vertragsstaaten:
**BE DE FR NL**

(56) Entgegenhaltungen:
**DE - A - 2 160 520**
**GB - A - 887 353**
**US - A - 3 504 075**

(73) Patentinhaber: **BASF Aktiengesellschaft**
**Carl-Bosch-Strasse 38**
**D - 6700 Ludwigshafen DE**

(72) Erfinder: **Mueller, Guenter**
**Dr. Gross-Ring 16**
**D - 6715 Lambsheim (DE)**
**Herner, Martin, Dr.**
**Mandelring 38**
**D - 6706 Wachenheim (DE)**

Courier Press, Leamington Spa, England.

Verfahren zur Herstellung von Vinylchloridpolymerisat-Hartfolien nach dem Luvitherm-Verfahren

Die Erfindung betrifft ein Verfahren zur Herstellung von Vinylchloridpolymerisat-Folien durch Verarbeitung von Vinylpolymerisaten nach dem Luvitherm-Verfahren.

Das Luvitherm-Verfahren zur Herstellung von Hartfolien aus Vinylchloridpolymerisaten ist bekannt. Es ist beispielsweise im Kunststoff-Handbuch, Band II, Carl-Henser-Verlag München, 1963, Polyvinylchlorid, Teil 1, Seiten 240 bis 244 beschrieben. Bei diesem Verfahren wird zunächst Polyvinylchlorid-Pulver mit Zusatzstoffen, insbesondere Gleitmitteln und Stabilisatoren, vermischt und vorplastifiziert. Diese vorplastifizierte Mischung aus Polymerisat und Zusatzstoffen wird dann in einer ersten Stufe bei relative niedrigen Temperaturen, im allgemeinen im Bereich von etwa 150 bis 190°, kalandiert, d.h. durch Walzen zu einer Folie gepreßt. Hierzu werden im allgemeinen Kalander mit 4 oder 5 Walzen in I-oder L-Anordnung eingesetzt. Die vom Kalander abgezogenen, spröden Folien werden in einer zweiten Verfahrensstufe zur Verbesserung ihrer mechanischen Festigkeit durch kurzzeitige Behandlung bei höheren Temperaturen, bei denen die Folien nur noch eine geringe Formfestigkeit besitzen, auf Walzen versintert.

Diese kurzzeitige Behandlung bei höheren Temperaturen (luvithermisieren), die ohne Druck durchgeführt wird, erfolgt im allgemeinen in einem Temperaturbereich von etwa 200 bis 280°C. Anschließend kann in einer weiteren Stufe die Folie zur Verbesserung der mechanischen Festigkeit gerecht werden.

Nach dem Luvitherm-Verfahren werden in allgemeinen feinkörnige Vinylchloridpolymerisate, die durch Polymerisation der Monomeren in wäßriger Emulsion erhalten worden sind, zu Hartfolien verarbeitet. Hierbei müssen dem Vinylchloridpolymerisat geeignete Gleitmittel in Mengen bis etwa 4 Gewichtsprozent zugemischt werden, um das Fließen der Polyvinylchlorid-Teilchen zu verbessern und das Ablösen der Folie von den heißen Walzen zu ermöglichen. Als Gleitmittel finden dabei insbesondere die äußeren Gleitmittel, wie beispielsweise Montanwachse, Polyäthylenwachse oder Metallseifen höherer Fettsäuren Verwendung.

Die bisher bekannten Arbeitsweisen zur Durchführung des Luvitherm-Verfahrens haben jedoch den Nachteil, daß man nur mit relative geringen Verarbeitungsgeschwindigkeiten arbeiten kann, da sonst kein ausreichendes Fließen der plastischen Masse erreicht wird und man damit nicht zu Folien mit zufriedenstellender Qualität und Oberflächengüte gelangt. Die Kalandriergeschwindigkeit wird dabei im allgemeinen begrenzt durch inhomogene Streifen, sogenannte Primär- oder Kalanderstreifen, Oberflächenstruktur der Folie sowie Transparenzverlust der Folie. Starke Streifigkeit kann dabei zu einer lokalen Verminderung der mechanischen Festigkeit führen. Solche Störstellen werden zumeist durch überschußmaterial im Walzenspalt hervorgerufen, welches den Walzenspalt passiert und in die Folie eingearbeitet wird, ohne ausreichend verpreßt und temperiert zu sein.

Aus wirtschaftlichen Erwägungen wird angestrebt, daß Luvitherm-Verfahren bei möglichst hohen Kalandriergeschwindigkeiten durchzuführen, ohne daß die Qualität der Folien beeinträchtigt wird. Zur Verbesserung der Verarbeitung und Erhöhung der Verarbeitungsgeschwindigkeit von Polyvinylchloridpolymerisaten nach dem Luvitherm-Verfahren ist bereits vorgeschlagen worden, den Vinylchloridpolymerisaten vor der Verarbeitung spezielle Gleitmittel und Verarbeitungshilfsmittel zuzumischen oder größere Mengen an äußeren Gleitmitteln zum Einsatz zu bringen. Der Einsatz spezieller Gleit- und Verarbeitungshilfsmittel beim Luvitherm-Verfahren konnte dabei bislang jedoch nur zu einem Teilerfolg des angestrebten Problems der Erhöhung der Kalandriergeschwindigkeit führen. Der Einsatz von größeren Mengen an äußeren Gleitmitteln ist unwirtschaftlich und insofern von Nachteil, als bekanntermaßen die Menge an Zusatzstoffen wegen des Einflusses dieser Additive auf die mechanischen Eigenschaften der Folien so gering als möglich gehalten werden soll. Außerdem läßt sich auch hierbei nur bei begrenzten Kalandriergeschwindigkeiten arbeiten.

Ferner ist bereits vorgeschlagen worden, Überschuß-Material im letzten Walzenspalt des Kalanders am Durchlauf zu hindern, um so die Streifenbildung in der Folie zu vermeiden und die Folienqualität zu verbessern. So ist aus der DE-OS 15 04 015 bekannt, Überschuß-Material im letzten Walzenspalt durch einen oszillierenden Finger im Spalt abzustreifen. Gemäß der DE-OS 15 04 256 wird vorgeschlagen, daß Überschuß-Material im letzten Walzenspalt bei der Herstellung von Hartkunststoffolien zur Erhöhung der Kalandriergeschwindigkeit und Verbesserung der Folienqualität so zu steigern, daß das Überschußmaterial als mehr oder weniger zusammenhängendes Fell im Walzenspalt abgequetscht und der Materialaufgabe wieder zugeführt werden kann. Beide Methoden bringen jedoch noch nicht den gewünschten Erfolg. Während die Arbeitsweise mit dem oszillierenden Finger hinsichtlich der Vermeidung von Kalanderstreifen nur eine relativ geringe Wirkung zeigt, hat das zuführen von viel Materialüberschuß in dem letzten Walzenspalt zur Folge, daß die Kalanderfolie nicht frei von Luftbläschen und anderen Störstellen ist. Zudem ist es der Stabilität des Materials abträglich, wenn es wiederholt die Walzenpalte durchlaufen muß.

Außerdem ist es bereits aus der DE-OS 15 04 199 bekannt, auf fertige Folien, die durch Extrusion von z.B. Polyäthylen, Polypropylen, Polycarbonaten etc. gewonnen werden, äußeres Gleitmittel aufzutragen, um die Behandlung zur Einstellung der gewünschten Folienstärke bei niedrigeren Temperaturen (ohne Heißwalze) durchführen zu können.

Der vorliegenden Erfindung lag daher die Aufgabe zugrunde, ein Verfahren der eingangs beschriebenen Art zur Herstellung von Hartfolien aus Vinylchloridpolymerisaten aufzuzeigen, nach welchem es möglich ist, die Kalandriergeschwindigkeit bei der Verarbeitung der Vinylchloridpolymerisate nach dem Luvitherm-Verfahren zu erhöhen und gleichzeitig die Qualität der Folie, insbesondere deren Oberflächengüte und Transparenz, zu verbessern, zumindest jedoch nicht wesentlich zu beeinträchtigen.

Diese Aufgabe wird erfingungsgemäß dadurch gelöst, daß bei der Durchführung des Luvitherm-Verfahrens mindestens auf die in Produktstromrichtung letzte Kalanderwalze ein Gleitmittel aufgetragen wird.

Gegenstand der vorliegenden Erfindung ist demzufolge ein Verfahren zur Herstellung von Vinylchloridpolymerisat-Hartfolien nach dem Luvitherm-Verfahren durch Kalandrieren der vorplastifizierten Vinylchloridpolymerisate, welche übliche Zusatzstoffe enthalten können, bei Temperaturen im Bereich von etwa 150 bis etwa 190°C, Luvithermisieren der so erhaltenen spröden Folie bei Temperaturen im Bereich von etwa 200 bis etwa 280°C und gegebenenfalls Recken der Luvithermisierten Folie, welches dadurch gekennzeichnet ist, daß beim Kalandrieren mindestens auf die in Produktflußrichtung letzte Kalanderwalze ein Gleitmittel in Form einer dünnen, gleichmäßigen Schicht über die gesamte Länge der Kalanderwalze kontinuierlich aufgetragen wird.

Unter Vinylchlorid-Polymerisaten im Sinne der Erfindung sind sowohl die Homo- als auch Copolymerisate des Vinylchlorids zu verstehen. Die Homopolymerisate des Vinylchlorids sollen dabei vorzugsweise einen K-Wert (nach DIN 53 726) von 70 bis 85, insbesondere von 75 bis 83 besitzen. Die Copolymerisate des Vinylchlorids können bis zu 30 Gewichtsprozent, vorzugsweise bis zu 15 Gewichtsprozent an anderen mit Vinylchloride copolymerisierbaren Monomeren enthalten. Beispiele für mit Vinylchlorid mischpolymerisierbaren Monomeren sind Vinylidenchlorid, Vinylester, vorzugsweise Vinylacetat und Vinylpropionat, Acryl- und Methacrylsäurealkylester, Acrylnitril, Styrol und Olefine, insbesondere Äthylen und Propylen. Die Homopolymerisate des Vinylchlorids werden im allgemeinen bevorzugt.

Vorzugsweise werden Vinylchloridpolymerisate eingesetzt, die durch wäßrige Emulsions-Polymerisation erhalten worden sind. Die Verfahren zur Emulsions-Polymerisation des Vinylchlorids sowie die hierzu eingesetzten verschiedenen Hilfsstoffe und Katalysatoren sind ausführlich in der Monographie von H. Kainer, Polyvinylchlorid und Vinylchlorid-Mischpolymerisate, Springer-Verlag (1965), Seiten 34 bis 59 beschrieben, worauf wegen weiterer Einzelheiten verweisen werden soll.

Die Vinylchlorid-Polymerisate werden nach dem Luvitherm-Verfahren, wie es eingangs beschrieben worden ist, zu Hartfolien verarbeitet. Hierzu werden die pulverförmigen Vinylchlorid-Polymerisate zunächst mit den üblichen und bekannten Zusatzstoffen gemischt. Als Zusatzstoffe kommen dabei insbesondere äußere Gleitmittel, andere Verarbeitungsmittel und Stabilisatoren in Betracht; zusätzlich können auch noch Füllstoffe, Pigmente und Farbstoffe zugesetzt werden. Die einzelnen Zusatstoffe werden dabei dem Vinylchlorid-Polymerisat in den üblichen und bekannten Mengenverhältnissen zugemischt. Als Gleitmittel, die im allgemeinen in Mengen von 2 bis 4 Gewichtsprozent, bezogen auf das Vinylchlorid-Polymerisat, eingesetzt werden, kommen beispielsweise Montanwachse, Polyäthylenwachse oder Metallsalze höherer Fettsäuren in Betracht. Als zusätzliche Verarbeitungshilfsmittel können Pfropfmischpolymerisate von Methylmethacrylat und/oder Styrol gegebenenfalls in Mischung mit Acrylnitril auf ein kautschukartiges Dienpolymerisat (die sogenannten ABS-, MBS-, AMBS-Polymerisate) in Mengen von 0,5 bis 5 Gewichtsprozent, vorzugsweise von 2 bis 3 Gewichtsprozent, bezogen auf das Vinylchlorid-Polymerisat, dienen, wie es in der DE-PS 26 24 656 beschrieben ist. Die Zusatzzstoffe werden den Vinylchloridpolymerisaten entweder direkt nach Beendigung der Polymerisation in der Dispersion oder nach deren Isolierung aus dem Reaktionsgemisch trocken zugemischt; sie können aber auch in jeder anderen bekannten Art und Weise mit den Vinylchloridpolymerisaten vermischt oder erst beim Vorplastifizieren auf der Mischwalze zugesetzt werden.

Die vorplastifizierte Mischung aus dem Vinylchloridpolymerisat und den Zusatzstoffen wird dann in an und für sich bekannter Weise in einem Mehrwalzen-Kalander zu einer zunächst noch spröden Folie mit geringer mechanischer Festigkeit verarbeitet. Üblicherweise werden Kalander mit 4 Walzen oder 5 Walzen verwendet, wobei die Walzen in I-Form oder L-Form angeordnet sind. Die vorplastifizierte Polymerisat-Mischung wird dabei in den Walzenspalt am einen Ende des Kalanders eingegeben und die Folie am anderen Ende des Kalanders abgezogen. Die Verarbeitung der Vinylchloridpolymerisate auf dem Kalander zur Folie erfolgt bei relativ niedrigen Walzen-Temperaturen, im allgemeinen im Bereich von etwa 150 bis etwa 190°C, vorzugsweise von etwa 150 bis etwa 175°C.

Gemäß der vorliegenden Erfindung wird nun bei dieser Kalandrierung mindestens auf die in Produktflußrichtung letzte Kalanderwalze ein Gleitmittel aufgetragen. Es können auch mehrere der Kalanderwalzen, beispielsweise die vorletzte und letzte Kalanderwalze, oder auch alle Kalanderwalzen mit dem Gleitmittel beaufschlagt werden. Es hat sich jedoch als völlig hinreichend erwiesen, wenn das Gleitmittel zumindest auf die in Produktstromrichtung letzte Kalanderwalze aufgetragen wird.

Unter Gleitmittel, die auf die Kalanderwalze aufgetragen werden, werden im Sinne der Erfindung alle Additive verstanden, die das Verarbeiten der Vinylchloridpolymerisate erleichtern und verbessern. Als Gleitmittel zum Auftrag auf die Kalanderwalzen eignen sich dabei alle bei der Herstellung von Polyvinylchlorid-Kalanderfolien bekannten und üblichen Gleitmittel, wie beispielsweise partielle Fettsäureester, epoxidiertes Sojabohnenöl oder Montan-Wachs. Es können hierfür aber auch andere Additive, etwa Stabilisatoren, die bekanntermaßen eine Gleitwirkung hervorrufen, eingesetzt werden. Flüssige Gleitmittel, wie beispielsweise Fettsäureester, können direkt auf die Kalanderwalzen aufgetragen werden. Feste Gleitmittel müssen zum Auftrag auf die Kalanderwalzen zerstäubt, geschmolzen oder anders verflüssigt werden.

Der Auftrag der Gleitmittel auf die Kalanderwalzen kann mittels jeder geeigneten Auftragsvorrichtung erfolgen, sofern nur gewähreleistet ist, daß der Auftrag gleichmäßig über die gesamte Walzenlänge stattfindet. Die Gleitmittel können beispielsweise durch Sprühen oder Stäuben auf die Kalanderwalzen aufgebracht werden. Flüssige Gleitmittel werden am besten mittels einer damit getränkten Rolle aus Filz oder eines Filzstreifens, über die gesamte Walzenlänge gleichmäßig auf der Walze aufliegen, aufgebracht. Die Auftragsvorrichtung wird bei den üblicherweise verwendeten senkrecht stehenden I-oder L-förmigen Kalandern am günstigsten auf den oberen Scheitelpunkt der letzten Kalanderwalze angeordnet.

Der Auftrag der Gleitmittel auf die Kalanderwalzen erfolgt zweckmäßigerweise kontinuierlich. Flüssige Gleitmittel können außer durch Sprüh- und Zerstäubungsvorrichtungen in vorteilhafter Weise dadurch kontinuierlich auf die Kalanderwalzen aufgetragen werden, daß ein Filzmantel über eine hohle Metallrolle geschoben wird, deren Metallmantel vorher mit vielen kleinen Bohrungen versehen wurde. Der kontinuierliche Zulauf des flüssigen Gleitmittels geschieht dann von einem Vorratsbehälter aus in die hohle Metallrolle hinein, von wo aus das flüssige Gleitmittel durch die Bohrungen des Metallmantels der Rolle in den Filzmantel eindringt und diesen gleichmäßig tränkt. Der Filzmantel der Auftragsrolle liegt dabei gleichmäßig über die gesamte Länge auf der Kalanderwalze auf, so daß das den Filzmantel durchdringende Gleitmittel auf die Kalanderwalze aufgetragen wird. Die mit dem Filzmantel überzogene hohle Metallrolle wird dabei zweckmäßigerweise separat von den Kalanderwalzen angetrieben und läuft im allgemeinen wesentlich langsamer als diese.

Das Gleitmittel braucht erfindungsgemäß nur in sehr dünner Schicht auf die Kalanderwalzen aufgetragen werden, sofern nur eine gleichmäßige Bedeckung der Walzen gewährleistet ist. Dementsprechend ist auch die Menge des Gleitmittels, welches auf die Kalanderwalze aufgetragen wird, äußerst gering. Es reicht aus, wenn das Gleitmittel in Mengen von nur etwa 0,03 Gewichtsprozent, bezogen auf die gesamte Vinylchloridpolymerisat-Mischung, aufgetragen wird. Im allgemeinen liegen die Mengen an Gleitmittel, die erfindungsgemäß auf die Kalanderwalzen aufgetragen werden und über diese zumeist in das Produkt übergehen, im Bereich von 0,01 bis 0,1 Gewichtsprozent, vorzugsweise im Bereich von 0,03 bis 0,05 Gewichtsprozent, bezogen auf das Vinylchloridpolymerisat.

Die Kalandriergeschwindigkeit (Geschwindigkeit der letzten Kalanderwalze) ist vom Produkt abhängig und beträgt im allgemeinen 20 bis 25 m/min. Bei Anwendung der erfindungsgemäßen Arbeitsweise läßt sie sich, je nach der zu verarbeitenden Polymerisat-Mischung, bis auf Werte von 50 m/min steigern, ohne daß dadurch die Qualität der Folie beeinträchtigt wird. Die vom Kalander abgezogene Folie wird in einer nachfolgenden Stufe in der für das Luvitherm-Verfahren üblichen und bekannten Weise durch kurzzeitige Behandlung bei höheren Temperaturen, im allgemeinen im Bereich von etwa 200 bis etwa 280°C, auf Walzen ohne Druck versintert, d.h. luvithermisiert. anschließend kann zusätzlich eine Reckung der Folie zur weiteren Verbesserung der mechanischen Festigkeit vorgenommen werden. Die weiteren Einzelheiten zur Durchführung des Luvitherm-Verfahrens, insbesondere zum Luvithermisieren der Kalander-Folie sowie gegebenenfalls zum Recken der Folie, sind dem Fachmann wohl bekannt; hierzu sei auch auf die einschlägige Fachliteratur verwiesen.

Das erfingungsgemäße Verfahren gestattet es, die Kalandriergeschwindigkeit bei der Verarbeitung von Vinylchloridpolymerisat nach dem Luvitherm Verfahren erheblich zu erhöhen. Es hat sich gezeigt, daß die Steigerung der Verarbeitungsgeschwindigkeit dabei die Eigenschaften der erhaltenen Folie, insbesondere deren Transparenz und Oberflächengüte, nicht beeinträchtigt. Es wurde sogar überraschenderweise gefunden, daß trotz der Erhöhung der Kalandriergeschwindigkeit bei Anwendung der erfindungsgemäßen Arbeitsweise Folien mit verbesserter Oberflächenqualität entstehen. Die erfindungsgemäß erhaltenen Folien sind praktisch frei von Kalanderstreifen und Luftbläschen und ihre Transparenz ist besser als die solcher Folien, die nach herkömmlicher Art hergestellt worden sind. Ein weiterer Vorteil des erfindungsgemäßen Verfahrens liegt darin, daß die zur Verarbeitung insgesamt notwendige Gleitmittelmenge verringert werden kann. Durch den Auftrag der geringen Mengen Gleitmittel auf die letzte Kalanderwalze wird es möglich, den Anteil an Gleit- und Verarbeitungshilfsmitteln, die vor der Kalandrierung üblicherweise dem Vinylchloridpolymerisat zugemischt werden, deutlich zu reduzieren, z.B. um 1/3 bzw. 1/2.

Die nach dem erfindungsgemäßen Verfahren hergestellten Folien haben je nach Walzenstand und Reckverhältnis im allgemeinen Dicken zwischen 25 und 200 $\mu$. Sie können beispielsweise auf dem Klebebandsektor oder für Tonbänder verwendet werden.

Die Erfindung wird durch die folgenden Beispiele erläutert. Die angegebenen Teile und Prozente beziehen sich, sofern nicht anders angeführt, auf das Gewicht.

Allgemeine Versuchsbeschreibung

100 Teile Emulsions-Polyvinylchlorid mit einem K-Wert von 78, welches bereits von der Herstellung her mit 2 Teilen eines Montansäureesters (E-Wachs) als Gleitmittel und 0,15 Teilen Diphenylthioharnstoff als Thermostabilisator ausgerüstet war, wurden mit weiteren 2 Teilen E-Wachs und weiteren 0,2 Teilen Diphinylthioharnstoff in einem schnelllaufenden Mischer intensiv gemischt. Die Pulvermischung wurde dann mit einem Planetenwalzenextruder bei 160°C in bekannter Weise vorplastifiziert und anschließend auf einem I-förmigen 4-Walzen-Kalander ausgewalzt. Die Kalanderwalzen hatten eine Länge von 800 mm und einen Durchmesser von 400 mm. Die Walzentemperaturen betrugen von Walze 1 (unterste Walze) zu Walze 4 (oberste Walze) hin: 172°C, 168°C, 165°C und 160°C. Die vom Kalander kommende 125$\mu$ dicke Folie wurde dann über eine Schmelzwalze geführt und dort bei einer Walzentemperatur von 265°C luvithermisiert. Anschließend wurde die Folie abgeführt und in üblicher Weise im Verhältnis 1:3 bei 110°C gereckt. Die Dicke der Endfolie betrug 40 $\mu$. Die Kalandriergeschwindigkeit (Geschwindigkeit der letzten Kalanderwalze) wurde zwischen 15 m/min und 50 m/min variiert.

Zur Beurteilung der erreichbaren und noch zulässigen Kalandriergeschwindigkeit wurde insbesondere die Oberflächenqualität der Kalanderfolie und die Zahl der matten Streifen in den Kalanderfolien in Betracht gezogen. Die Luvithermisierung konnte bei der Beurteilung unberücksichtigt bleiben, weil das Luvitherm-Verhalten weitgehend von der Qualität der Kalanderfolie abhängig ist.

Vergleichsbeispiel A
(Herstellung einer Standardfolie zu Vergleichszwecken)

Der Versuch wurde so durchgeführt wie in der allgemeinen Versuchsbeschreibung angegeben worden ist. Bei einer Kalandriergeschwindigkeit von 18 m/min wurde eine Kalanderfolie erhalten, die hinsichtlich Oberfläche und Steifigkeit gut war. Sie hatte über die Breite von 70 cm ca. 8 bis 10 Kalanderstreifen. Bei einer Erhöhung der Kalandriergeschwindigkeit auf 20 m/min verschlechterte sich die Folienqualität merklich. Die Kalanderstreifen in der Folie wurden breiter und ihre Zahl erhöhte sich auf ca. 14 bis 16 Stück über die Breite von 70 cm. Die Folienoberfläche wurde inhomogen.

Beispiel 1

In diesem Beispiel wurde unter den gleichen Bedingungen wie in Vergleichsversuch A gearbeitet, wie sie in der allgemeinen Versuchsbeschreibung angegeben sind. Zusätzlich wurde jedoch auf den Scheitelpunkt der letzten Kalanderwalze (Walze 4) eine Filzrolle aufgelegt, die mit einem partiellen Fettsäureester getränkt war.

Bei einer Kalandriergeschwindigkeit von 18 m/min wurde eine Folie erhalten, die gänzlich frei von Kalanderstreifen war und im Vergleich zu der nach Vergleichsversuch A hergestellten Folie zusätzlich eine verbesserte Oberfläche hatte.

Bei einer Erhöhung der Kalandriergeschwindigkeit auf 20 m/min wurde eine Folie der gleichen Qualität wie bei 18 m/min erhalten. Die Kalandriergeschwindigkeit konnte bis auf 36 m/min gesteigert werden, ohne daß Inhomogenitäten der Oberfläche der Folie oder Kalanderstreifen erkennbar waren. Erst bei Kalandriergeschwindigkeiten von 38 bis 40 m/min traten Kalanderstreifen in der Folie auf, jedoch erst in der Intensität wie bei der nach Vergleichsversuch A bei einer Kalandriergeschwindigkeit von 18 m/min hergestellten Folie.

Vergleichsversuch B

In Abhänderung der allgemeinen Versuchsbeschreibung wurde bei diesem Versuch eine Mischung aus 100 Teilen Emulsions-Polyvinylchlorid mit einem K-Wert von 70, 0,4 Teilen Diphinylthioharnstoff, 1 Teil OP-Wachs und 2 Teilen E-Wachs eingesetzt. Im übrigen erfolgte die Durchführung des Versuches wie in der allgemeinen Versuchsbeschreibung beschrieben. Die vom Kalander abgezogene Folie hatte eine Dicke von 160$\mu$. Die Folie wurde diesmal nach dem luvithermisieren nicht gereckt. Die Endfolie war 140$\mu$ dick.

Bei einer Kalandriergeschwindigkeit von 14 m/min wurden Folien mit ca. 5 Kalanderstreifen auf der Gesamtbreite der Kalanderfolie erhalten. Die Kalanderstreifen waren relativ breit und matt. Bei einer Erhöhung der Kalandriergeschwindigkeit auf 20 m/min vervielfältigte sich die Zahl der Kalanderstreifen und wurde die Folienoberfläche insgesamt matt. Die Kalanderstreifen rissen beim Luvithermisieren auf der Schmelzwalze auf.

Beispiel 2

Es wurde wie in Vergleichsversuch B beschrieben gearbeitet. Zusätzlich wurde jedoch auf die letzte Kalanderwalze (Walze 4) eine Filzrolle aufgelegt, die mit einem partiellen Fettsäureester getränkt war.

Bei einer Kalandriergeschwindigkeit von 14 m/min waren auf der Kalanderfolie keine Kalanderstreifen zu erkennen; die Folienoberfläche war gut. Bei Erhöhung der Kalandriergeschwindigkeit auf 20 m/min entstanden schwache Kalanderstreifen auf der Folie, jedoch war deren Zahl und Intensität geringer als bei der Folie die gemäß Vergleichsversuch B bei einer Kalandriergeschwindigkeit von 14 m/min. hergestellt worden war.

**Patentansprüche**

1. Verfahren zur Herstellung von Vinylchloridpolymerisat Hartfolien bei erhöhter Temperatur und in Gegenwart eines während der Herstellung der Folie zugegebenen Gleitmittels, bei dem man Vinylchloridpolymerisate durch Kalandrieren bei Temperaturen im Bereich von 150 bis etwa 190°C vorplastifiziert, die dabei erhaltene spröde Folie im Bereich von etwa 200 bis 280°C luvithermisiert, *dadurch gekennzeichnet,* daß beim Kalandrieren mindestens auf die in Produktflußrichtung letzte Kalanderwalze ein Gleitmittel in Form einer dünnen, gleichmäßigen Schicht über die gesamte Länge der Kalanderwalze kontinuierlich aufgetragen wird.

2. Verfahren nach Anspruch 1, *dadurch gekennzeichnet,* daß das Gleitmittel in flüssiger Form auf die Kalanderwalze aufgetragen wird.

**Revendications**

1. Procédé de préparation de feuilles dures à partir de polymères du chlorure de vinyle à température élevée et en présence d'un agent lubrifiant ajouté au cours de la préparation des feuilles, dans lequel on soumet des polymères du chlorure de vinyle à une plastification préalable par calandrage à des températures dans l'intervalle de 150 à 190°C environ puis on soumet les feuilles cassantes obtenues à une Luvithermisation dans l'intervalle de température d'environ 200 à 280°C, caractérisé en ce que, au calandrage, on applique en continu, au moins sur le dernier cylindre de calandre dans la direction d'écoulement du produit, un agent lubrifiant sous forme d'une couche régulière mince sur toute la longueur du cylindre de calandre.

2. Procédé selon la revendication 1, caractérisé en ce que l'agent lubrifiant est appliqué à l'état liquide sur le cylindre de calandre.

**Claims**

1. A process for the production of rigid vinyl chloride polymer sheeting at elevated temperature and in the presence of a slip agent added during the production of the sheeting, in which vinyl chloride polymers are preplasticized by calendering at temperatures of from 150 to about 190°C and luvithermizing the resulting brittle sheeting at from 200 to 280°C, *characterized in that* a slip agent is continuously applied during calendering at least to the calendar roll which is the last in the direction of product flow in the form of a thin, uniform layer over the whole length of the calender roll.

2. A process as claimed in claim 1, *characterized in that* the slip agent is applied in liquid form to the calender roll.